# DEMANDE DE BREVET EUROPEEN

(11) **EP 1 749 451 A1**
(43) Date de publication de la demande: **07.02.2007**
(21) Numéro de dépôt: 05017059.6
(22) Date de dépôt: 05.08.2005
(51) Int. Cl.: A41D 27/06, A41H 43/04

(54) **Procédé de collage de textiles à l'aide de colle thermofusible**

(71) Demandeur: Arkema France, 92800 Puteaux (FR)
(72) Inventeur: Hilgers, Hermann, 532121 Bonn (DE); Kowalski, Manfred, 51588 Nümbrecht (DE)
(74) Mandataire: Delprat, Corinne

(57) **Abrégé**

La présente invention est un procédé de collage de deux textiles (A) et (B) dans lequel :
1) on dépose sur le textile (A) des points de colle thermofusible comprenant un mélange de deux polymères thermofusibles a1 et a2, la température de fusion de a2 étant supérieure de 50°C à celle de a1, puis,
2) on dépose sur le textile (A), du coté des points de colle de a1+a2, un polymère thermofusible b1 en poudre, la température de fusion de b1 étant égale à la température de fusion de a1 plus ou moins 20°C, les points de colle de a1+a2 étant suffisamment collants pour retenir la poudre de b1, puis,
3) on enlève la poudre de b1 qui n'a pas collé sur les points de colle a1+a2, puis,
4) on presse, à une température proche ou égale à la température de fusion de b1, le textile (B) sur le textile (A) du coté revêtu des points de colle.

A l'issue de l'étape 3) on obtient un textile (A) recouvert de points de colle sur l'une de ses faces, les dits points de colle étant constitués de deux couches superposées, l'une comprenant le mélange a1+a2 contre le textile (A), l'autre constituée de b1. L'invention concerne aussi en tant que produit ce textile (A) recouvert des ces points de colle à deux couches.

Le sous point de colle comprenant a1+a2 ne fond pas quand on presse le textile (B) sur le textile (A) à une température proche ou égale à la température de fusion de b1 ce qui évite au point de colle de traverser le textile (A).

## Description

### [Domaine de l'invention]

Les colles (adhésfs) thermofusibles sont des matériaux thermoplastiques solides à la température ambiante et qui par chauffage deviennent des liquides visqueux. Ces liquides visqueux (ou ces pâtes) sont appliquéssur un premier textile puis on le couvre avec un second textile. Par refroidissement, on obtient une adhéence entre les deux textiles. Ces colles sont désignéespar l'abréviation HMA (hot melt adhesives), on les désigne aussi par le terme "hot melt".

### [L'art antérieuret le problème technique]

Le collage de deux textiles est une opération courante dans l'industrie textile. Elle est utile pour fixer, par exemple, une doublure ou une pièce de renfort d'un vêtement. On utilise des colles thermofusibles constituées de polymères qui sont des copolyamides qu'on dépose par points sur le textile (A) puis on presse à chaud le textile (B) sur le textile (A) du coté revêtu des points de colle. Parmi tous les problèmes rencontrés l'un des plus délicats à résoudre consiste dans le risque de transpercement du textile (A) lors de l'application par pression à chaud. En effet la température qui est choisie pour effectuer cette application à chaud doit permettre de réaliser la fusion du point de polymère de manière à ce que le polymère ainsi fondu puisse se répartir et adhérer sur les fibres ou filaments en surface de l'autre textile. Il arrive cependant fréquemment que cette répartition ne se fasse pas uniquement en surface mais que le polymère flue à travers les fibres ou filaments et apparaisse sur la surface extérieure de (A). La surface extérieure de (A) est la surface qui n'est pas disposée du coté de (B). Ce transpercement a pour effet d'augmenter localement la rigidité du textile (A) et donc de la pièce ce qui peut être contraire à l'effet souhaité.

Dans la demande de brevet EP 855146 les points de colle déposés sur le textile (A) sont soumis à un bombardement électronique de telle sorte qu'on réticule la partie du point de colle qui est disposée contre le textile (A) tout en ne modifiant pas la partie supérieure du point de colle destinée à coller sur le textile (B). On obtient ainsi dans l'ordre le textile (A), de la colle réticulée et la colle non modifiée. Ainsi au cours du collage la partie réticulée ne peut pas fluer.

Dans la demande de brevet EP 1044617 (=US 6344238) on dépose sur le textile (A) des points de colle en polyuréthane réticulable à l'humidité puis pendant que ce polyuréthane réticule et reste à température suffisante pour être collant on dépose une deuxième colle (en poudre) qui se fixe sur le polyuréthane. Cette colle en poudre peut être un copolyester ou un copolyamide. On aspire la colle en poudre qui est restée sur le textile (A) et qui ne s'est pas fixée sur le polyuréthane, on obtient ainsi dans l'ordre le textile (A), de la colle réticulée (le polyuréthane) et la colle en poudre. Comme dans l'art antérieur précédent au cours du collage la partie réticulée ne peut pas fluer.

Dans la demande de brevet EP 1162304 (=US 2002/0019185) on décrit un procédé similaire au précédent mais dans lequel le polyuréthane réticulable est remplacé par un époxy.

Dans la demande de brevet DE 10240926 (=US 2004/0087229) on décrit un procédé similaire à celui décrit dans la demande EP 1044617 citée plus haut mais dans lequel le polyuréthane réticulable est remplacé par un mélange d'un acrylate et d'un époxy.

Tous ces systèmes ont l'inconvénient de nécessiter une réticulation et donc les compositions doivent contenir les catalyseurs et initiateurs nécessaires. On a maintenant trouvé un procédé beaucoup plus simple : On dépose sur le textile (A) des points de colle constitués d'un mélange de deux polymères thermofusibles ayant des températures de fusion différentes (l'une haute, l'autre basse) puis on dépose sur ces points un autre polymère thermofusible (en poudre) ayant une température de fusion proche du polymère à basse température de fusion.

### [Brève description de l'invention]

La présente invention est un procédé de collage de deux textiles (A) et (B) dans lequel :
1) on dépose sur le textile (A) des points de colle thermofusible comprenant un mélange de deux polymères thermofusibles a1 et a2, la température de fusion de a2 étant supérieure de 50°C à celle de a1, puis,
2) on dépose sur le textile (A), du coté des points de colle de a1+a2, un polymère thermofusible b1 en poudre, la température de fusion de b1 étant égale à la température de fusion de a1 plus ou moins 20°C, les points de colle de a1+a2 étant suffisamment collants pour retenir la poudre de b1, puis,
3) on enlève la poudre de b1 qui n'a pas collé sur les points de colle a1+a2, puis,
4) on presse, à une température proche ou égale à la température de fusion de b1, le textile (B) sur le textile (A) du coté revêtu des points de colle.

A l'issue de l'étape 3) on obtient un textile (A) recouvert de points de colle sur l'une de ses faces, les dits points de colle étant constitués de deux couches superposées, l'une comprenant le mélange a1+a2 contre le textile (A), l'autre constituée de b1. L'invention concerne aussi en tant que produit ce textile (A) recouvert des ces points de colle à deux couches.

Le sous point de colle comprenant a1+a2 ne fond pas quand on presse le textile (B) sur le textile (A) à une température proche ou égale à la température de fusion de b1 ce qui évite au point de colle de traverser le textile (A).

### [Description detaillée de l'invention]

**S'agissant des textiles (A) et (B)** ce sont des tissés ou des non tissés. Ils peuvent être, par exemple, en laine, coton, polyester ou polyamide. Ils peuvent composés de plusieurs couches de textiles ou comprendre des couches d'autres matériaux.

**S'agissant des colles thermofusibles,** la température de fusion de a2 est avantageusement supérieure de 45°C à celle de a1 et de préférence supérieure de 40°C à celle de a1. La température de fusion est mesurée par DSC (differential scanning calorimetry) ou selon DIN 53736, Teil B (visuelle Bestimmung der Schmelztemperatur von teilkristallinen Kunststoffen) optiquement à l'aide d'un banc chauffant et un microscope. Avantageusement le MVI (abréviation de Melt Volume Index ou indice de fluidité en volume à l'état fondu) de a2 est compris entre 5 et 30 cm3/10 min (2,16kg-190°C). Avantageusement le MVI de a1 est compris entre 5 et 80 cm3/10 min (2,16kg-150°C). A titre d'exemple la température de fusion de a2 est comprise entre 140 et 170°C. A titre d'exemple la température de fusion de a1 est comprise entre 100 et 130°C.

La proportion de a1 et a2 est avantageusement 40 à 60% en poids de a2 pour respectivement 60 à 40% de a1. La proportion de a1 et a2 est de préférence 40 à 50% en poids de a2 pour respectivement 60 à 50% de a1. le mélange se présente sous forme de pâte (le total faisant 100% en poids) comprenant 20 à 40% en poids de a1+a2, 20 à 40% d'eau, 20 à 40% d'agent de dispersion (Bemifuse OSPE de Schmits International B.V. par exemple) et de 0 à 10% des agents épaississant ou lubrifiants. Ce mélange comprenant a1+a2 forme la partie inférieure du point de colle (celle qui est contre le textile (A)).

La température de fusion de a2 est choisie en fonction du textile (A) pour pouvoir adhérer sur lui.

La température de fusion de b1 est choisie en fonction du textile (B) pour adhérer sur lui. A titre d'exemple la température de fusion de b1 est comprise entre 80 et 140°C. le MVI de b1 peut être compris entre 5 et 90 cm3/10 min (2,16kg-150°C). Avantageusement b1 est compatible avec a1+a2. Avantageusement a1 est identique à b1. a1, a2 et b1 peuvent être en copolyamide, copolyetherester, polyoléfine, copolymère éthylène (meth)acrylate d'alkyle, copolymère éthylène acétate de vinyle. a1, a2 et b1 peuvent être de même nature ou être différents ou deux peuvent être de même nature et l'autre différent. Avantageusement a1, a2 et b1 sont de même nature, c'est à dire que ce sont tous des copolyamides, des copolyetheresters, des polyoléfines, des copolymères éthylène (meth)acrylate d'alkyle, des copolymères éthylène acétate de vinyle. Avantageusement sont des copolyamides. A titre d'exemple de copolyamides on peut citer le PA 6/6.6/12, le PA 6/6.6/11 et le PA 6/12.

**S'agissant des étapes 1-4** elles sont connues en elles mêmes. L'étape 3 peut être réalisée par soufflage ou aspiration de la poudre de b1 qui n'a pas collé su r A1 +a2.

### [Exemples]

### Exemple 1 : mélange de a1 et a2

50 % d'un copolyamide a2 de formule 6/6.6/12 de proportions en poids respectivement 45/25/20 Tf = 145-155, MVI = 15 (190°C /2,16 kg)
60 % d'un copolyamide a1 de formule 6/6.6/12 de proportions en poids respectivement 20/20/60 Tf = 125-135, MVI = 18 (150°C/2,16 kg)

### Exemple 2 : Formulation de la pâte contenant a1 et a2 selon l'invention

32 % Eau
32 % agent dispersant ( Bemifuse OSPE de Schmits International B.V.)
6 % lubrifiant base aqueuse comprenant des Polyethyleneglycols (Bemilube S de Schmits International B.V)
1-2% épaississant basés sur un acide polyacrylique neutralisé (Thickener G de Schmits International B.V)
30 % mélange a1+a2 de Exemple 1

### Exemple 3 : Formulation d'une pâte comparative

32 % Eau
32 % agent dispersant Bemifuse OSPE
6 % lubrifiant Bemilube S
1-2% épaississant Thickener G
30 % Copolyamide 6/6.6/12 de proportions en poids respectivement 40/25/35 avec un Tf = 115 - 125°C

### Exemple 4 : Comparaison des résultats d'adhésion des essais de lamination

Tableau :

| | | | |
|---|---|---|---|
| Pâte sous-point | | Example 3 (comparatif)) | Example 2 (invention) |
| Poudre b1 : | | coPA 6/6.6/12 en proportions poids respectives 40/25/35 et MVI 90 (160°C-2,16kg), Tf 110-125°C | coPA 6/6.6/12 en proportions poids respectives 40/25/35 et MVI 90 (160°C-2,16kg), Tf 110-125°C |
| Masse déposée g/m² | | 4g sous point (a1+a2) ; 6 g poudre b1 (les 6 g representent la poudre collée sur a1+a2) | |
| Cadre sérigraphique | | CP 76 | |
| Conditions lamination | | p=0,30 bar pour t=12s ; | |
| Force d'adhesion après lamination (N/5cm) | 80°C | | |
| | 90°C | 1,5 | 2,0 |
| | 100°C | 2,0 | 6,0 |
| | 110°C | 3,5 | 12,0 |
| | 120°C | 4,5 | 13,0 |
| | 130°C | 6,0 | 18,0 |
| | 140°C | 7,0 | 21,5 |
| | 150°C | 7,0 | 22,0 |
| Force d'adhesion après lavage à 3 x 40°C (N/5cm) | 80°C | | |
| | 90°C | 0,5 | 1,0 |
| | 100°C | 2,0 | 5,0 |
| | 110°C | 3,5 | 7,5 |
| | 120°C | 4,0 | 8,0 |
| | 130°C | 4,0 | 8,0 |
| | 140°C | 5,0 | 11,5 |
| | 150°C | 5,0 | 14,0 |
| Test du traversé (strike back) | | | |
| 120°C | | Significative | Aucun |
| 140°C | | beaucoup | Aucun |
| 160°C | | beaucoup | Aucun |

## Revendications

1. Procédé de collage de deux textiles (A) et (B) dans lequel :
1) on dépose sur le textile (A) des points de colle thermofusible comprenant un mélange de deux polymères thermofusibles a1 et a2, la température de fusion de a2 étant supérieure de 50°C à celle de a1, puis,
2) on dépose sur le textile (A), du coté des points de colle de a1+a2, un polymère thermofusible b1 en poudre, la température de fusion de b1 étant égale à la température de fusion de a1 plus ou moins 20°C, les points de colle de a1+a2 étant suffisamment collants pour retenir la poudre de b1, puis,
3) on enlève la poudre de b1 qui n'a pas collé sur les points de colle a1+a2, puis,
4) on presse, à une température proche ou égale à la température de fusion de b1, le textile (B) sur le textile (A) du coté revêtu des points de colle.

2. Procédé selon la revendication 1 dans lequel la température de fusion de a2 est avantageusement supérieure de 45°C à celle de a1.

3. Procédé selon la revendication 2 dans lequel la température de fusion de a2 est avantageusement supérieure de 40°C à celle de a1.

4. Procédé selon l'une quelconque des revendications précédentes dans lequel le MVI de a2 est compris entre 5 et 30 cm3/10 min (2,16kg-150°C).

5. Procédé selon l'une quelconque des revendications précédentes dans lequel le MVI de a1 est compris entre 5 et 80 cm3/10 min (2,16kg-150°C).

6. Procédé selon l'une quelconque des revendications précédentes dans lequel la température de fusion de a2 est comprise entre 140 et 170°C.

7. Procédé selon l'une quelconque des revendications précédentes dans lequel la température de fusion de a1 est comprise entre 100 et 130°C.

8. Procédé selon l'une quelconque des revendications précédentes dans lequel les proportions de a1 et a2 sont de 40 à 60% en poids de a2 pour respectivement 60 à 40% de a1.

9. Procédé selon l'une quelconque des revendications précédentes dans lequel le mélange comprenant a1 et a2 se présente sous forme de pâte.

10. Procédé selon l'une quelconque des revendications précédentes dans lequel a1, a2 et b1 sont choisis parmi les copolyamides, les copolyetheresters, les polyoléfines, les copolymères éthylène (meth)acrylate d'alkyle, les copolymères éthylène acétate de vinyle.

11. Procédé selon la revendication 10 dans lequel a1, a2 et b1 sont choisis parmi les copolyamides.

12. Textile (A) recouvert de points de colle sur l'une de ses faces, les dits points de colle étant constitués de deux couches superposées, l'une comprenant le mélange a1+a2 contre le textile (A), l'autre constituée de b1 dans lequel :
la température de fusion de a2 est supérieure de 50°C à celle de a1,
la température de fusion de b1 est égale à la température de fusion de a1 plus ou moins 20°C,
